# EUROPÄISCHE PATENTANMELDUNG

(11) **EP 3 064 474 A1**
(43) Veröffentlichungstag der Anmeldung: **07.09.2016**
(21) Anmeldenummer: 15000654.2
(22) Anmeldetag: 06.03.2015
(51) Int. Cl.: C01G 49/06, C01G 49/14

(54) **Verfahren zur Weiterverarbeitung von Eisensulfat-Heptahydrat**

(71) Anmelder: Kronos International, Inc., 51373 Leverkusen (DE)
(72) Erfinder: Medved, Mitja, 51375 Leverkusen (DE); Pierau, Thomas, 51371 Leverkusen (DE)

(57) **Zusammenfassung**

Die Erfindung richtet sich auf ein Verfahren zur Weiterverarbeitung von Eisensulfat-Heptahydrat zu Eisensulfat-Monohydrat.

Das Verfahren umfasst die Schritte: a) Bilden einer wässrigen Lösung bzw. Suspension von Eisensulfat-Heptahydrat in einem Behälter (Mischung I), b) Fördern von Mischung I in ein Druckgefäß und Aufheizen der Mischung (I) auf eine Temperatur, die über der Siedetemperatur der Mischung (I) bei Atmosphärendruck liegt, wobei sich Eisensulfat-Monohydrat als Feststoff und eine Lösung (II) bilden, c) Abtrennen des Eisensulfat-Monohydrat-Feststoffs aus Lösung (II).

Optional wird weiterhin der in der Lösung II verbliebene Eisengehalt zurückgewonnen, indem Lösung II in einem Oxidationsreaktor mit Luft oder Sauerstoff und gegebenenfalls Additiven reagiert und sich Eisenoxid und Eisenhydroxid in fester Form bilden,

## Beschreibung

### Gebiet der Erfindung

Die Erfindung richtet sich auf ein Verfahren zur Weiterverarbeitung von Eisensulfat-Heptahydrat zu Eisensulfat-Monohydrat und optional zu Eisenoxiden bzw. Eisenhydroxiden.

### Technologischer Hintergrund der Erfindung

Bei der Herstellung von Titandioxid nach dem sogenannten Sulfatverfahren wie auch beim Beizen von Eisenmetallen fallen große Mengen an Eisensulfat an. Eisensulfat wird in verschiedenen Bereichen verwendet, beispielsweise bei der Wasseraufbereitung in Kläranlagen, als Reduktionsmittel für Chromat in Zement oder als Rohstoff für die Eisenoxidherstellung.

Grundsätzlich liegt Eisensulfat aus technischen Prozessen in 3 Hydratstufen vor, als Hepta-, Tetra- oder Monohydrat. Bei der genannten Titandioxidherstellung nach dem Sulfatverfahren und bei der Beizung von Eisenmetallen fällt das Eisensulfat hauptsächlich als Heptahydrat an. Eisensulfat-Heptahydrat hat den höchsten Wassergehalt der drei Hydratstufen und lässt sich bei Temperaturen über 25°C schlecht lagern, weil es dabei im eigenen Kristallwasser schmilzt. Bei der Chromatreduktion im Zement zeigt es eine geringere Wirksamkeit als beispielsweise das Tetrahydrat und das Monohydrat.

Es wurden deswegen verschiedene Prozesse entwickelt, um das Eisensulfat-Heptahydrat zu niedrigeren Hydratstufen weiterzuverarbeiten.

Die Umwandlung des Heptahydrats zu Tetrahydrat oder Monohydrat erfolgt heutzutage großtechnisch überwiegend durch thermische Trocknung. Der Nachteil dieses Verfahrens besteht jedoch in einem relativ hohen Energieverbrauch, der aufgrund der Wärmeausbeute von ca. 50% mindestens dem Zweifachen der Verdampfungswärme des zu entfernenden Kristallwassers entspricht.

Bei der ebenfalls energieintensiven Kühlkristallisation verbleiben nach Abtrennung des Eisensulfats aufgrund der Löslichkeitskurve im System Eisensulfat-Wasser mindestens 13 Gew.% Eisensulfat in der Lösung (Mutterlauge).

Alternativ kann ein Schmelzverfahren gemäß DE 1 230 409 angewendet werden, bei dem das Eisensulfat-Heptahydrat auf bis zu 95°C erhitzt wird, so dass es in seinem Kristallwasser schmilzt und Eisensulfat-Monohydrat ausfällt und abgetrennt wird. Dieses Verfahren ist energiegünstiger als die thermische Trocknung, allerdings verbleiben entsprechend dem Löslichkeitsverhalten im System Eisensulfat-Wasser etwa 25 Gew.% Eisensulfat in der Mutterlauge.

Es besteht somit das Bedürfnis nach einem Verfahren zur Weiterverarbeitung von Eisensulfat-Heptahydrat, das die Nachteile des Stands der Technik überwindet.

### Aulgabenstellung und Kurzbeschreibung der Erfindung

Der Erfindung liegt die Aufgabe zugrunde, ein Verfahren zur Weiterverarbeitung von Eisensulfat-Heptahydrat zu Eisensulfat-Monohydrat und gegebenenfalls weiteren Eisenverbindungen anzugeben, das energieeffizient ist und sich durch eine erhöhte Rückgewinnung an Eisenverbindungen auszeichnet.

Die Aufgabe wird gelöst durch ein Verfahren zur Weiterverarbeitung von Eisensulfat-Heptahydrat gekennzeichnet durch folgende Verfahrensschritte:
a) Bilden einer wässrigen Lösung bzw. Suspension von Eisensulfat-Heptahydrat in einem Behälter (Mischung I),
b) Fördern von Mischung I in ein Druckgefäß und Aufheizen der Mischung (I) auf eine Temperatur, die über der Siedetemperatur der Mischung (I) bei Atmosphärendruck liegt, wobei sich Eisensulfat-Monohydrat als Feststoff und eine Lösung (II) bilden,
c) Abtrennen des Eisensulfat-Monohydrat-Feststoffs aus Lösung (II).

Weitere vorteilhafte Ausformungen der Erfindung sind in den Unteransprüchen angegeben.

### Figuren

- Figur 1:: Löslichkeitskurve von Eisensulfat in Wasser (nach: Gmelins Handbuch der anorganischen Chemie, System-Nr. 59 "Eisen", Teil B-Lieferung 2, 8. Aufl. 1930, S. 401)
- Figur 2:: Löslichkeitskurve von Eisensulfat in Wasser gemäß Fig. 1, erweitert mit weiteren Messpunkten bis etwa160°C
- Figur 3:: Schematisches Fließbild des erfindungsgemäßen Verfahrens

### Beschreibung der Erfindung

Alle im Folgenden offenbarten Angaben bezüglich Temperatur, Druck, Konzentration in Gew.% usw. sind so zu verstehen, dass alle Werte, die im Bereich der dem Fachmann bekannten jeweiligen Messgenauigkeit liegen, mit umfasst sind.

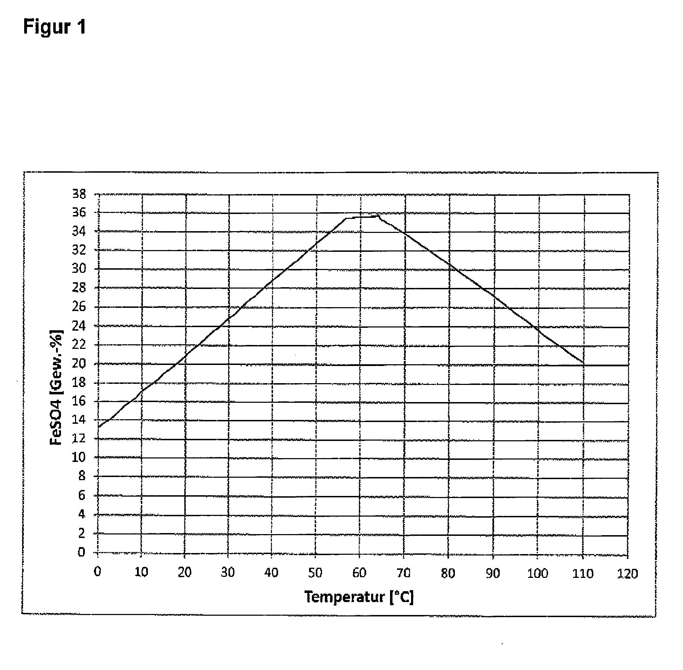

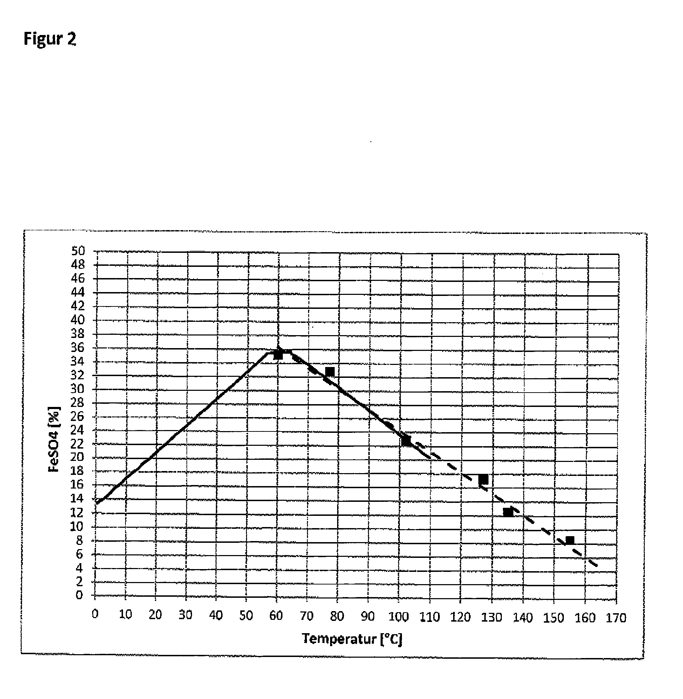

Das erfindungsgemäße Verfahren geht aus von der Erkenntnis, dass die Löslichkeit von Eisensulfat in Wasser oberhalb einer Temperatur von etwa 60°C abnimmt. Im Rahmen der Erfindung wurden Untersuchungen zum Verhalten der Löslichkeit von Eisensulfat in Wasser bei Temperaturen oberhalb von 110°C bis etwa 160°C und bei entsprechendem Druck durchgeführt. Figur 2 zeigt die entsprechenden Analysenwerte (Punkte) und den daraus ermittelten Verlauf der Löslichkeitskurve als gestrichelte Linie. Aus Figur 2 ergibt sich, dass bei einer Temperatur oberhalb von etwa 135°C die Löslichkeit von Eisensulfat geringer wird als die Löslichkeit bei einer Temperatur von 5°C, welche in technischen Systemen die untere Grenze der praktisch umsetzbaren Kühltemperatur darstellt. Üblicherweise werden jedoch mit Hilfe von Verdampfungskühlanlagen mit vertretbarem energetischen Aufwand lediglich minimale Temperaturen von ca. 15°C erreicht, bei denen die Eisensulfatlöslichkeit etwa 18 Gew.% beträgt und somit 18 Gew.-% Eisensulfat in der Lösung (Mutterlauge) verbleiben (siehe Fig. 1).

Gemäß der vorliegenden Erfindung werden wässrige Eisensulfatlösungen und/oder - suspensionen über die Siedetemperatur, die sich bei Atmosphärendruck einstellt, hinaus erhitzt. Dabei sinkt die Löslichkeit von Eisensulfat mit steigender Temperatur und Eisensulfat-Moilohydrat fällt aus. Bekanntermaßen geht die steigende Temperatur mit einer Druckerhöhung einher.

In einer besonderen Ausführung der Erfindung wird die Lösung auf über 110°C, insbesondere auf 135°C bis 220°C und insbesondere bevorzugt auf 140°C bis 160°C erhitzt. Die Temperatur von 160°C wird beispielsweise bei einem Druck von etwa 6 bar erreicht. Die Untersuchungen im Rahmen der vorliegenden Erfindung haben ergeben, dass die Eisensulfatlöslichkeit bei 140°C etwa 10-12 Gew.-% und bei 160°C etwa 4-6 Gew.-% beträgt und damit deutlich niedriger liegt als bei den bekannten auf einem Schmelzprozess basierenden Verfahren.

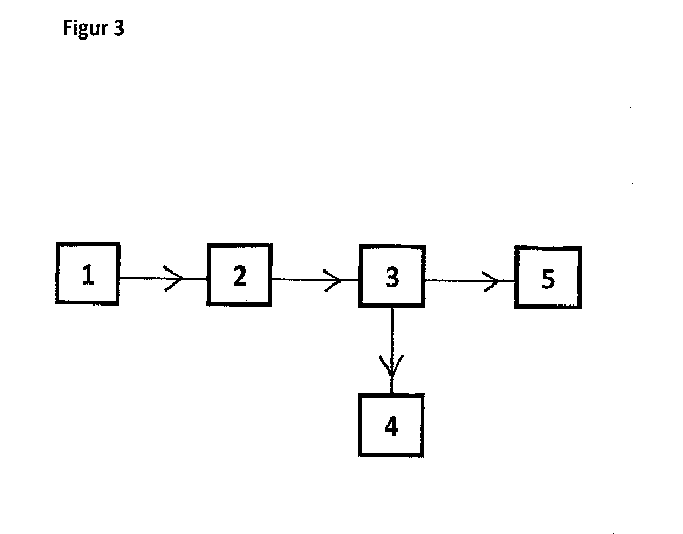

Ein schematisches Fließbild des erfindungsgemäßen Verfahrens zeigt Figur 3.

In einem ersten Schritt wird in einem Behälter (1) eine wässrige Lösung und/oder Suspension von Eisensulfat-Heptahydrat (Mischung I) hergestellt. Die Eisensulfatlösung/-suspension ist gesättigt oder bevorzugt übersättigt.

Die Mischung I wird in ein beheizbares Druckgefäß (Autoklav) (2) gefördert. Hier wird die Mischung I auf eine Temperatur, die über der Siedetemperatur bei Atmosphärendruck liegt, erhitzt, bevorzugt auf über 110°C, insbesondere auf 135°C bis 220°C und insbesondere bevorzugt auf 140°C bis 160°C. Durch die druckfeste Ausführung bildet sich ein zur jeweiligen Temperatur korrespondierender Überdruck aus. Gemäß der sich verringernden Löslichkeit von Eisensulfat in Wasser bei hohen Temperaturen fällt Eisensulfat-Monohydrat aus.

Anschließend erfolgt die Abtrennung (3) des Eisensulfat-Monohydrats (4), und es verbleibt eine Eisensulfatarme Lösung, sogenannte Mutterlauge (Lösung II) (5).

In einer besonderen Ausführung wird die Lösung II mit dem ausgefallenen Eisensulfat-Monohydrat einem Zyklon oder Filter vorzugsweise einem Druckfilter oder einer Dekanterzentrifuge zugeführt. Diese sind bevorzugt auf die Temperaturen der eintretenden Lösung II (?) beheizt und ebenfalls druckfest ausgeführt, um eine Abtrennung des Eisensulfat-Monohydrats ohne Wiederanlösung zu ermöglichen.

Die Lösung II (5) kann in einer besonderen Ausführung zumindest zum Teil in den Behälter (1) zurückgeführt werden.

In einer alternativen Ausführung der Erfindung wird der in der Lösung II (5) verbliebene Eisengehalt ebenfalls zu einem großen Teil zurückgewonnen. Hierzu wird die Lösung II (5), welche nicht in den Behälter (1) zurückgeführt wurde, in einen Oxidationsreaktor gefördert. Der Oxidationsreaktor ist in einer besonderen Ausführung druckfest ausgeführt und wird mit Luft oder Sauerstoff betrieben. Darüber hinaus können zur Unterstützung der Oxidation Additive zugegeben werden wie Salze (z.B. NaCl) oder alkalische Substanzen (z.B. NaOH). Die Temperatur wird bevorzugt auf über 25°C, insbesondere auf 70°C bis 220°C und insbesondere bevorzugt auf 140°C bis 160°C eingestellt. Bei der Oxidation bilden sich Eisenhydroxide bzw. Eisenoxide in fester Form und eine Lösung III, die nach Abtrennung der Feststoffe nahezu eisenfrei ist. "Nahezu eisenfrei" bedeutet im Rahmen der Erfindung ein Gesamteisengehaft von weniger als 0,5 Gew.-%.

Das erfindungsgemäß gewonnene Eisensulfat-Monohydrat kann in bekannter Weise verwendet werden, beispielsweise in der Wasseraufbereitung, als Reduktionsmittel allgemein und insbesondere zur Chromatreduktion in Zement. Des Weiteren besteht die Möglichkeit zur Weiterverarbeitung zu Eisenoxidpigmenten oder zur Herstellung von Schwefelsäure über ein Röstverfahren.

Das erfindungsgemäß hergestellte Eisenoxid bzw. Eisenhydroxid kann allgemein in Entschwefelungsverfahren eingesetzt sowie weiter zur Herstellung von Eisenoxidpigmenten oder Roheisen verwendet werden.

### Beispiel

Im Folgenden soll das erfindungsgemäße Verfahren mit einer Stoffbilanzrechnung beispielhaft dargestellt werden, ohne dass damit eine Einschränkung der Erfindung beabsichtigt ist.

Zunächst wird aus 1000 kg Eisensulfat-Heptahydrat und 180 kg Wasser eine übersättigte wässrige Eisensulfat-Heptahydrat-Lösung hergestellt, die einen FeSO₄-Gehalt von etwa 41 Gew.-% und einen gerechneten Fe-Gehalt von etwa 180 kg aufweist (Mischung I).

Die Mischung I wird auf 65°C erhitzt und in ein beheizbares Druckgefäß gefördert. In dem Druckgefäß wird die Temperatur auf 160°C erhöht, wobei sich ein Druck von etwa 6 bar einstellt. Während der Erhitzung fällt gemäß der Löslichkeitskurve Eisensulfat-Monohydrat als Feststoff in einer Menge von etwa 522 kg aus, entsprechend etwa 172 kg Fe.

Das Eisensulfat-Monohydrat wird unter den erhöhten Druck- und Temperaturbedingungen mit vernachlässigbar geringer Menge anhaftender Mutterlauge abgetrennt. Dabei verbleibt eine eisenarme Lösung in einer Menge von etwa 658 kg mit einem Gehalt an Fe von etwa 8 kg (Lösung II).

Um in einem weiteren Schritt den Eisengehalt der Lösung II weiter zu reduzieren, wird der Lösung II eine etwa 36%ige NaCl-Lösung (58 kg NaCl in 100 kg Wasser) zugegeben. Die NaCl-haltige Lösung II wird anschließend in einen druckfesten Oxidationsreaktor gefördert. Durch Zugabe von erwärmter Luft werden die vorhandenen Eisenbestandteile in der Lösung II oxidiert. Unter den Bedingungen von etwa 140 bis 160°C und etwa 5 bis 6 bar und einem Umsetzungsgrad von etwa 80% wird Eisenhydroxid und Eisenoxid (Fe₂O₃) als Feststoff in einer Menge von etwa 10 kg (bezogen auf das stabile Eisenoxid) entsprechend etwa 6 kg Fe gebildet.

Es verbleibt eine Menge von etwa 796 kg Abwasser (Lösung III) mit einer Menge von etwa 2 kg gelöstem Fe, entsprechend einem Fe-Gehalt von etwa 0,25 Gew.-%.

Das erfindungsgemäße Verfahren ermöglicht somit, etwa 96 Gew.-% des Eisens aus dem Eisensulfat-Heptahydrat in Eisensulfat-Monohydrat umzuwandeln und in einer besonderen Ausführung etwa weitere 3 Gew.-% Eisen als Eisenoxid rückzugewinnen.

## Patentansprüche

1. Verfahren zur Weiterverarbeitung von Eisensulfat-Heptahydrat **gekennzeichnet durch** folgende Verfahrensschritte:
a) Bilden einer wässrigen Lösung bzw. Suspension von Eisensulfat-Heptahydrat in einem Behälter (Mischung I),
b) Fördern von Mischung I in ein Druckgefäß und Aufheizen der Mischung (I) auf eine Temperatur, die über der Siedetemperatur der Mischung I bei Atmosphärendruck liegt, wobei sich Eisensulfat-Monohydrat als Feststoff und eine Lösung II bilden,
c) Abtrennen des Eisensulfat-Monohydrat-Feststoffs aus Lösung II.

2. Verfahren nach Anspruch 1 **dadurch gekennzeichnet, dass**
in Schritt b) auf über 110°C, insbesondere auf 135°C bis 220°C, insbesondere bevorzugt auf 140°C bis 160°C bei entsprechendem Überdruck aufgeheizt wird.

3. Verfahren nach Anspruch 1 oder 2 **dadurch gekennzeichnet, dass** Lösung II zumindest teilweise rückgeführt wird in den Behälter von Schritt a).

4. Verfahren nach einem oder mehreren der Ansprüche 1 bis 3 **dadurch gekennzeichnet, dass**
sich im Anschluss an Verfahrensschritt c) folgende Verfahrensschritte anschließen:
d) Fördern von Lösung II in einen Oxidationsreaktor und Zuführung von Luft oder Sauerstoff und gegebenenfalls von Additiven,
e) Einstellen einer Temperatur im Bereich von über 25°C, insbesondere auf 70°C bis 220°C, insbesondere bevorzugt auf 140°C bis 160°C und Ausfällen von Eisenoxid und/oder Eisenhydroxid und Bildung einer nahezu eisenfreien Lösung III,
f) Abtrennen des Eisenoxids und Eisenhydroxids.

5. Verfahren nach Anspruch 4 **dadurch gekennzeichnet, dass**
als Additiv Salze oder alkalische Substanzen eingesetzt werden.

6. Verfahren nach Anspruch 4 oder 5 **dadurch gekennzeichnet, dass** der Oxidationsreaktor druckfest und ggfs. beheizbar ausgerüstet ist.

7. Verfahren nach einem oder mehreren der Ansprüche 1 bis 6 **dadurch gekennzeichnet, dass**
das Eisensulfat-Monohydrat in folgenden Bereichen verwendet wird:
Wasseraufbereitung, Reduktionsmittel beispielsweise zur Chromatreduktion in Zement, Herstellung von Eisenoxidpigment, Herstellung von Schwefelsäure durch Röstung.

8. Verfahren nach einem oder mehreren der Ansprüche 4 bis 6 **dadurch gekennzeichnet, dass**
das Eisenoxid und Eisenhydroxid in Entschwefelungsverfahren eingesetzt werden oder zu Eisenoxidpigment oder Roheisen weiterverarbeitet werden.
